# EUROPÄISCHE PATENTSCHRIFT

(11) **EP 2 899 393 B1**
(45) Veröffentlichungstag und Bekanntmachung des Hinweises auf die Patenterteilung: **29.06.2016**
(21) Anmeldenummer: 15151813.1
(22) Anmeldetag: 20.01.2015
(51) Int. Cl.: F02M 61/08, F02M 61/12, F02M 61/18, F02M 55/00, F02M 51/06, F02M 21/02

(54) **Ventil zum Zumessen von Fluid**
Valve for measuring out fluid
Vanne pour l'ajout de fluide

(30) Priorität: 22.01.2014 DE 102014201065
(43) Veröffentlichungstag der Anmeldung: 29.07.2015
(73) Patentinhaber: Robert Bosch GmbH, 70442 Stuttgart (DE)
(72) Erfinder: Stoecklein, Wolfgang, 71332 Waiblingen (DE); Schmieder, Dietmar, 71706 Markgroeningen (DE); Landenfeld, Tilo, 71665 Vaihingen/Enz (DE); Suenderhauf, Gerhard, 75233 Tiefenbronn (DE)

(56) Entgegenhaltungen:
- EP-A2- 1 116 878
- DE-A1- 10 002 718
- DE-A1- 19 907 355
- DE-A1- 19 929 473
- DE-A1-102006 013 958
- JP-A- 2000 027 733

## Beschreibung

### Stand der Technik

Die Erfindung geht aus von einem Ventil zum Zumessen von Fluid nach dem Oberbegriff des Anspruchs 1. Der für ein strömendes oder fließendes Medium stehende, übergeordnete Begriff Fluid wird hier in Übereinstimmung mit der Strömungslehre für Gase und Flüssigkeiten verwendet.

Ein bekanntes Zumessventil zur Dosierung von Flüssigkeiten oder Gasen, z.B. ein Einspritzventil für direkt einspritzende Dieselmotoren (DE 199 07 355 A1), weist einen Ventil- oder Düsenkörper auf, in den eine Führungsbohrung eingebracht ist. In der Führungsbohrung ist eine Ventilnadel verschiebbar zwischen einer offenen und einer geschlossenen Stellung geführt. Das nach außen gerichtete Ende der Ventilnadel weist ein Dichtelement auf, das in geschlossener Stellung der Ventilnadel auf einem Ventilsitz aufliegt und die Führungsbohrung nach außen hin abdichtet. Stromabwärts des Ventilsitzes münden mehrere Zumessöffnungen in die Führungsbohrung. Die Ventilnadel wird mittels einer Ventilschließfeder in der geschlossenen Stellung gehalten und mittels eines Aktors, z.B. eines Magnetventils oder eines piezoelektrischen Aktors, gegen die Federkraft der Ventilschließfeder in die offene Stellung überführt, in der das Dichtelement nach außen vom Ventilsitz abhebt und den Kraftstofffluss durch die Zumessöffnungen freigibt. Unterhalb des Ventilsitzes ist im Ventilkörper eine Führungsfläche ausgebildet, in der die Ventilnadel mit einer an ihrem Dichtelement ausgebildeten Führungsfläche geführt ist. Zwischen den Führungsflächen ist ein Führungsspalt von 1 bis 8 µm vorhanden.

Aus der DE 199 29 473 A1 ist bereits ein Ventil zum Zumessen von Fluid bekannt, das mit einem eine Innenwand aufweisenden Ventilkörper, der eine fluidbefüllte, von einem Dichtsitz verschlossene Ventilkammer aufweist und mit einem die Ventilkammer durchdringenden Ventilglied, das mit einem am Ventilkörper ausgebildeten Ventilsitz den Dichtsitz bildet und in Fluidströmungsrichtung stromabwärts des Dichtsitzes im Ventilkörper mit Radialspiel gleitgeführt ist, ausgestaltet ist. Zudem besitzt das Ventil im Ventilkörper ausgebildete Spritzlöcher, die je eine stromabwärts des Dichtsitzes in der Innenwand des Ventilkörpers liegende Locheintrittsöffnung aufweisen. Der Ventilkörper ist mit einem Körperboden abgeschlossen, der mit dem Ventilglied einen Leckagesammelraum begrenzt. Der Leckagesammelraum steht über einen im Ventilglied verlaufenden Leckagekanal mit einer Leckagekammer in Verbindung.

### Offenbarung der Erfindung

Das erfindungsgemäße Ventil zu Zumessen von Fluid mit den Merkmalen des Anspruchs 1 hat den Vorteil, dass durch Verschließen des freien Endes des Ventilkörpers und durch Vorsehen eines zwischen Ventilglied und Ventilkörperboden vorhandenen Leckageraums, der über einen im Ventilkörper verlaufenden Leckagekanal mit einem Fluidrücklauf verbunden ist, der Radialspalt zwischen den Führungsflächen an Ventilglied und Ventilkörper stromabwärts des Dichtsitzes wenig genau sein muss und somit die Führungsflächen mit einem deutlich größeren Toleranzbereich gefertigt werden können, was den Fertigungsvorgang verbilligt. Die aus dem Radialspalt austretende Fluidleckage wird im Lecksammelraum aufgefangen und gelangt nicht in den Dosierraum, in den die beim Ventilöffnen zugemessene Fluidmenge über die Spritzlöcher eingespritzt wird. Die in den Dosierraum dosiert eingespritzte Fluidmenge wird somit nicht durch die Leckage erhöht und somit z.B. bei Kraftstoffeinspritzung die optimale Kraftstoffverbrennung im Verbrennungszylinder nicht beeinträchtigt. Insbesondere bei Einspritzanlagen für Dieselmotoren ist ein Kraftstoffrücklauf vorhanden, an dem die einzelnen Einspritzventile angeschlossen sind, so dass hier der Zusatzaufwand zur Realisierung eines Ventils vom A-Typ, das vorteilhaft mit Spritzlöchern ausgestattet ist, relativ gering ist.

Durch die in den weiteren Ansprüchen aufgeführten Maßnahmen sind vorteilhafte Weiterbildungen und Verbesserungen des im Anspruch 1 angegebenen Ventils möglich.

Gemäß der Erfindung weist das Ventilglied eine mit dem Ventilsitz den Dichtsitz bildende, die Ventilkammer begrenzende, ringförmige Druckbeaufschlagungsfläche auf, deren Außendurchmesser größer und deren Innendurchmesser deutlich kleiner als der Ventilsitzdurchmesser ist. Ein an die Druckbeaufschlagungsfläche sich stromabwärts anschließender Ventilgliedabschnitt weist einen an den Außendurchmesser der Druckbeaufschlagungsfläche angepassten, über den Ventilgliedabschnitt konstanten Außendurchmesser auf und ist im Ventilkörper gleitgeführt. Das Radialspiel zwischen der Führungsfläche an diesem Ventilgliedabschnitt und der am Ventilkörper ausgebildeten Führungsfläche kann einen großen Toleranzbereich aufweisen.

Gemäß der Erfindung ist am Ventilglied stromabwärts des Ventilsitzes eine von der Druckbeaufschlagungsfläche abgekehrte Ringschulter ausgebildet, deren Außendurchmesser dem Außendurchmesser der Druckbeaufschlagungsfläche und deren Innendurchmesser dem Ventilsitzdurchmesser entspricht. Der stromabwärts der Ringschulter sich anschließende Ventilgliedabschnitt ist gegen den Ventilkörper abgedichtet. Zwischen der Ringschulter und dem gegen den Ventilkörper abgedichteten Ventilgliedabschnitt verbleibt ein Ringraum, dessen axiale Abmessung größer ist als der maximale Verschiebeweg des Ventilglieds. In dem zwischen Druckbeaufschlagungsfläche und Ringschulter liegenden Ventilgliedabschnitt ist durch in den Umfang des Ventilgliedabschnitts eingeschliffene, ebene Flächen eine Verbindung zum Ringraum hergestellt.

Durch die am Ventilglied zusätzliche ausgebildete Ringschulter, die bei offenem Ventil durch das in den Ringraum strömende Fluid druckbelastet ist, vergrößert sich bei offenem Ventil der hydraulische Wirkdurchmesser auf das Ventilglied nicht, sondern bleibt unverändert. Damit muss die zum Schließen des Ventils erforderliche Federkraft der Ventilschließfeder nicht größer ausgelegt werden als die im Schließzustand des Ventils zur Aufrechterhaltung des Dichtsitzes von der Ventilschließfeder abgeforderte Federkraft. Eine kleinere Federschließkraft erfordert eine kleinere Schaltkraft des Aktors zum Ventilöffnen, so dass ein piezoelektrischer Aktor axial kürzer ausgelegt werden kann und sich der im Ventil vorzuhaltende Bauraum für den Aktor verkleinert. Kleinere Schaltkräfte ergeben eine geringere Verlustleistung des Aktors, und eine kleinere Schließkraft der Ventilschließfeder verringert den Verschleiß am Ventilsitz.

Gemäß einer vorteilhaften Ausführungsform der Erfindung weist der sich an die Ringschulter stromabwärts anschließende Ventilgliedabschnitt einen dem Ventilsitzdurchmesser entsprechenden Außendurchmesser auf und die Abdichtung des Ventilgliedabschnitts gegen den Ventilkörper ist mittels eines Dichtrings vorgenommen, der den Ringraum auf dessen der Ringschulter gegenüberliegenden Seite begrenzt. Eine solche konstruktive Gestaltung ermöglicht eine fertigungstechnisch einfache Herstellung des Ventilglieds mit Druckbeaufschlagungsfläche und Ringschulter durch einfaches Abdrehen bestimmter Ventilgliedabschnitte und Führungsflächen am Ventilkörper stromabwärts des Ventilsitzes.

Gemäß einer vorteilhaften Ausführungsform der Erfindung liegt der Dichtungsring in einer im Ventilkörper ausgebildeten Ringnut ein und ist mittels eines Federelements axial gegen die den Ventilsitz näher liegende Nutflanke angepresst. Vorzugsweise wird das Federelement mittels des an den Ventilkörper angesetzten und befestigten, z.B. verschweißten Körperbodens vorgespannt.

Gemäß einer vorteilhaften Ausführungsform der Erfindung ist der Ventilkörper axial an ein Ventilgehäuse angesetzt, das einen den Aktor und eine Ventilschließfeder zur Ventilgliedbetätigung aufnehmenden Gehäuseinnenraum aufweist. Der Innenraum ist von einer Membran abgedeckt, die mit dem Ventilkörper die Leckagekammer begrenzt. Die Leckagekammer ist mit einem Rücklaufkanal für den Fluidrücklauf und die Ventilkammer mit einem Zulaufkanal für einen Fluidzulauf verbunden, wobei sich Rücklauf- und Zulaufkanal axial im Ventilgehäuse erstrecken. Mit der Leckagekammer wird zugleich auch Fluidleckage, die aus der Ventilkammer über eine Gleitführung des Ventilglieds im Ventilkörper oberhalb der Ventilkammer austritt, aufgefangen und zusammen mit der Fluidleckage aus dem Leckagesammelraum über den Rücklaufkanal abgeführt. Die Fluidversorgung für die Ventilkammer erfolgt vorteilhaft über den im Ventilgehäuse verlaufenden und in den Ventilkörper eintauchenden Zulaufkanal.

### Kurze Beschreibung der Zeichnungen

Die Erfindung ist anhand von in den Zeichnungen dargestellten Beispielen in der nachfolgenden Beschreibung näher erläutert. Es zeigen:
- Figur 1: einen Längsschnitt eines Ventils zum Zumessen von Fluid,
- Figur 2: eine vergrößerte Darstellung des Ausschnitts II in Figur 1,
- Figur 3: eine gleiche Darstellung wie in Figur 2 bei offenem Ventil,
- Figur 4: eine vergrößerte Darstellung des Ausschnitts IV in Figur 1,
- Figur 5: eine gleiche Darstellung wie in Figur 2 gemäß einem Ausführungsbeispiel des Ventils.

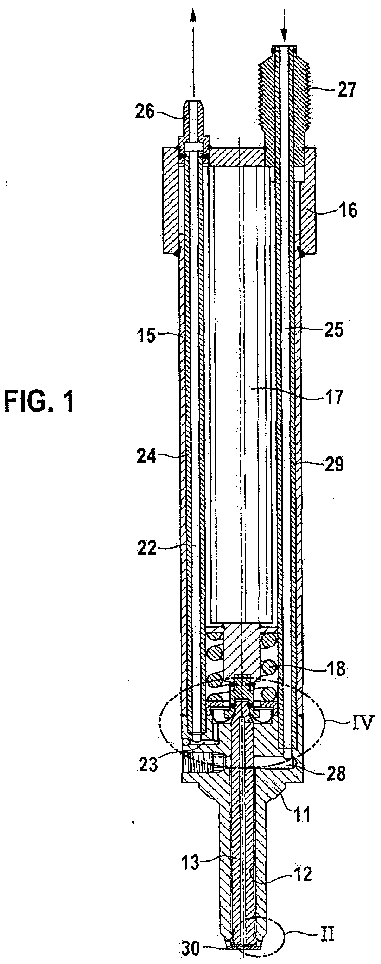

Das in Figur 1 im Längsschnitt dargestellte Ventil zum Zumessen von Fluid wird bevorzugt als Einspritzventil zum Einspritzen von Kraftstoff, z. B. Benzin oder Dieselkraftstoff, in einer Kraftstoffeinspritzanlage von Brennkraftmaschinen, z. B. Otto- oder Dieselmotoren, eingesetzt. Es kann jedoch auch in Gasmotoren oder in Heizungsanlagen zum dosierten Zumessen von fluidem Brennstoff oder als Dosierventil zum Einspritzen eines fluiden Reduktionsmittels in den Abgastrakt einer Brennkraftmaschine zwecks Reduzierung von Stickoxiden im Abgas Verwendung finden.

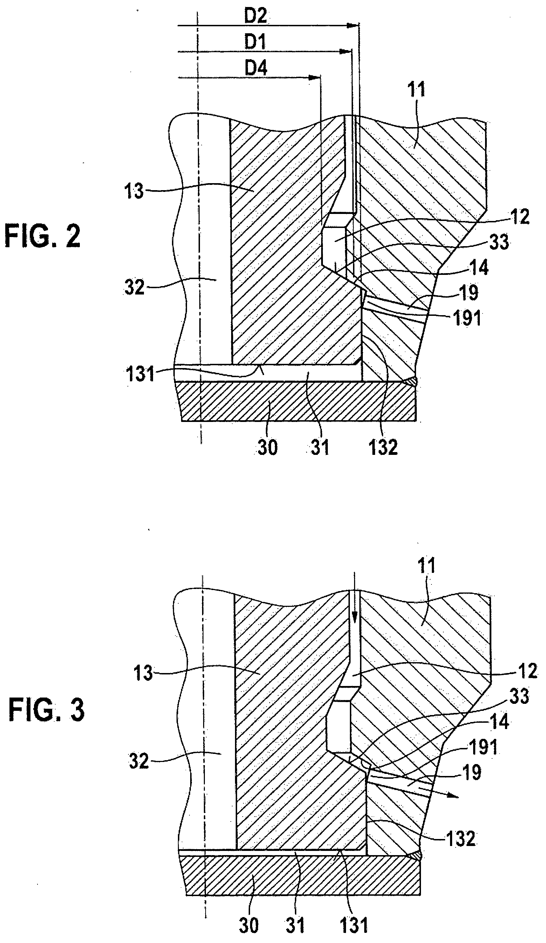

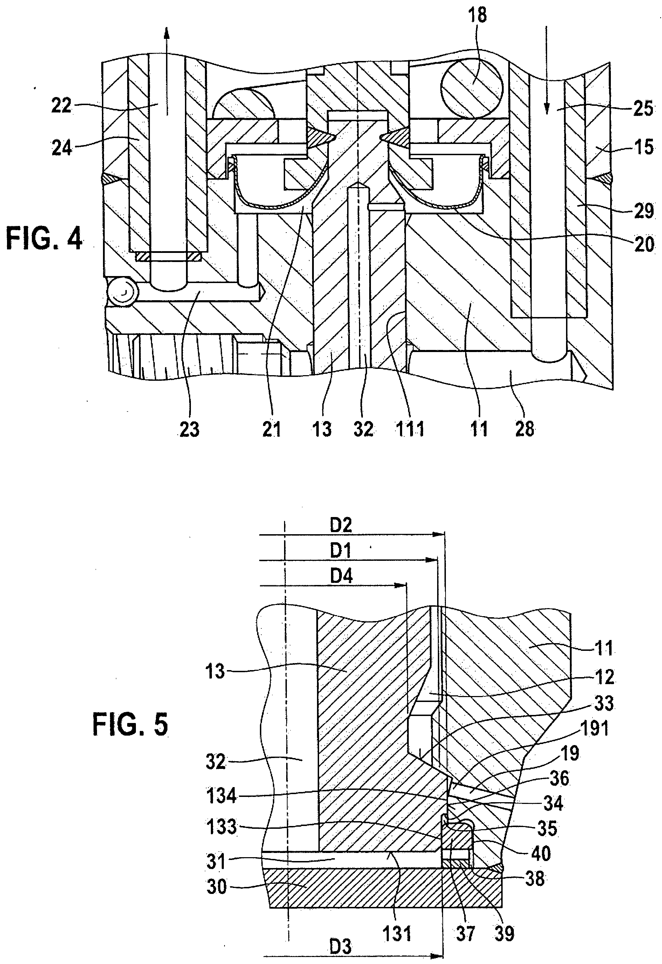

Das Ventil weist einen hohlen Ventilkörper 11 mit einer fluidbefüllten, von einem Dichtsitz verschlossenen Ventilkammer 12 und ein die Ventilkammer 12 durchdringendes Ventilglied 13 auf, das mit einem am Ventilkörper 11 ausgebildeten Ventilsitz 14 mit einem Ventilsitzdurchmesser D1 (Figur 2 und 3) den Dichtsitz bildet. Der Ventilkörper 11 ist an ein rohrförmiges Ventilgehäuse 15 angesetzt und mit diesem fest verbunden. Das Ventilgehäuse 15 ist am ventilkörperfernen Gehäuseende mit einer auf das Ventilgehäuse 15 aufgesetzten Gehäusekappe 16 verschlossen. Im Ventilgehäuse 15 sind ein elektrischer Aktor 17 und eine Ventilschließfeder 18 zur Betätigung des Ventilglieds 13angeordnet, die beide, aber mit gegensinniger Wirkrichtung, am Ventilglied 13 angreifen. Das langgestreckte, nadelförmige Ventilglied 13 ist im Ventilkörper 11 einerseits in einer im Eingangsbereich des Ventilkörpers 11 vor der Ventilkammer 12 ausgebildeten Gleitführung 111 (Figur 4) und andererseits in Fluidströmungsrichtung stromabwärts des Dichtsitzes mit Radialspiel axial verschieblich geführt. Im Ventilkörper 11 sind mehrere Spritzlöcher 19 ausgebildet, von denen in Figur 2 und 3 ein Spritzloch 19 zu sehen ist. Jedes Spritzloch 19 weist eine stromabwärts des Dichtsitzes in der Innenwand des Ventilkörpers 11 liegende Locheintrittsöffnung 191 auf. Die Ventilschließfeder 18 legt das Ventilglied 13 an den Ventilsitz 14 an, und der Aktor 17 verschiebt das Ventilglied 13 in Strömungsrichtung des Fluids, wobei das Ventilglied 13 vom Ventilsitz 14 abhebt und den Fluiddurchfluss durch die Spritzlöcher 19 freigibt. Der Aktor 17 und Ventilschließfeder 18 aufnehmende Innenraum des Ventilgehäuses 15 ist mittels einer Membran 20 fluiddicht abgedeckt, wobei die Membran 20 mit ihrem äußeren Rand am Ventilkörper 11 und mit ihrem inneren Rand am Ventilglied 13 festgelegt ist. Membran 20 und Ventilkörper 11 schließen eine Leckagekammer 21 ein, in der über die Gleitführung 111 aus der Ventilkammer 12 austretende Fluidleckage aufgefangen wird. Die Leckagekammer 21 ist über einen Rücklaufkanal 22 zu einem Anschluss 26 für den Fluidrücklauf geführt. Im dargestellten Beispiel setzt sich der Rücklaufkanal 22 aus im Ventilkörper 11 verlaufenden, in der Leckagekammer 21 mündenden Bohrungen 23 und einem im Innenraum des Ventilgehäuses 15 sich axial erstreckenden und festgelegten Rohr 24, das in eine der Bohrungen 23 im Ventilkörper 11 eintaucht, zusammen. Die Ventilkammer 12 ist über einen Zulaufkanal 25 mit einem Anschluss 27 für den Fluidzulauf verbunden. Der Zulaufkanal 25 setzt sich wiederum aus im Ventilkörper 11 verlaufenden Bohrungen 28, die in der Ventilkammer 12 münden, und einem sich axial im Ventilgehäuse 15 erstreckenden und festgelegten Rohr 29, das in eine der Bohrungen 28 eintaucht, zusammen.

Der hohle Ventilkörper 11 ist an seinem ventilgehäusefernen Ende mit einem Körperboden 30 verschlossen, der z.B. als eine an die Stirnfläche des Ventilkörpers 11 angeschweißte Scheibe ausgeführt ist. Zwischen dem Körperboden 30 und der dem Körperboden 30 zugekehrten Stirnfläche 131 des Ventilglieds 13 ist ein Leckagesammelraum 31 vorhanden, der über einen im Ventilglied 13 verlaufenden Leckagekanal 32 mit der Leckagekammer 21 in Verbindung steht. Der Leckagesammelraum 31 hat eine axiale Tiefe, die größer ist als der maximale Verschiebeweg des Ventilglieds 13.

Das Ventilglied 13 weist eine ringförmige Druckbeaufschlagungsfläche 33 auf, die die Ventilkammer 12 begrenzt und mit dem Ventilsitz 14 den Dichtsitz bildet. Die Druckbeaufschlagungsfläche 33 besitzt einen Außendurchmesser D2, der größer ist als der Ventilsitzdurchmesser D1, und einen Innendurchmesser D4, der deutlich kleiner als der Ventilsitzdurchmesser D1 ist (Figur 2). Der sich an die Druckbeaufschlagungsfläche 33 stromabwärts anschließende Ventilgliedabschnitt 132 besitzt einen an den Außendurchmesser D2 angepassten Außendurchmesser, der über die Länge des Ventilgliedabschnitts 132 konstant ist. Mit diesem Ventilgliedabschnitt 132 ist das Ventilglied 13 im Ventilkörper 11 mit Radialspiel geführt.

In Figur 2 ist die Ventilgliedposition bei geschlossenem Ventil dargestellt. Die Druckbeaufschlagungsfläche 33 am Ventilglied 13 ist durch die gegen die Fluidströmungsrichtung gerichtete Federkraft der Ventilschließfeder 18 auf den Ventilsitz 14 aufgepresst. Die Spritzlöcher 19 sind verschlossen. In Figur 3 ist die Ventilgliedposition bei geöffnetem Ventilglied 13 dargestellt. Der Aktor 17 hat das Ventilglied 13 in Richtung Körperboden 30 verschoben. Die Druckbeaufschlagungsfläche 33 am Ventilglied 13 ist vom Ventilsitz 14 abgehoben und der Fluiddurchfluss zu den Spritzlöchern 19 freigegeben. Infolge des Radialspiels zwischen Ventilkörper 11 und dem Ventilgliedabschnitt 132 anfallende, in den Leckagesammelraum 31 fließende Fluidleckage wird aus dem Leckagesammelraum 31 über den Leckagekanal 32 der Leckagekammer 21 zugeführt. Von dort gelangt die Fluidleckage über den Rücklaufkanal 22 in den Fluidrücklauf.

Das in Figur 5 dargestellte Ausführungsbeispiel des Ventils unterscheidet sich von dem Ventil gemäß Figur 1 und 2 dadurch, dass am Ventilglied 13 stromabwärts des Dichtsitzes eine von der Druckbeaufschlagungsfläche 33 abgekehrte Ringschulter 34 ausgebildet ist, deren Außendurchmesser dem Außendurchmesser D2 der Druckbeaufschlagungsfläche 33 und deren Innendurchmesser dem Ventilsitzdurchmesser D1 entspricht. Zur Ausbildung der Ringschulter 34 ist der stromabwärts der Ringschulter 34 vorhandene Ventilgliedabschnitt 133 auf einen gegenüber dem Außendurchmesser D2 der Druckbeaufschlagungsfläche 33 am Ventilglied 13 reduzierten Außendurchmesser D3 abgedreht, der etwa dem Ventilsitzdurchmesser D1 entspricht. Unterhalb der Ringschulter 34 ist der Ventilgliedabschnitt 133 gegen den Ventilkörper 11 so abgedichtet, dass zwischen der Ringschulter 34 und dem Ventilkörper 11 ein Ringraum 35 mit einer axialen Tiefe oder Abmessung, die kleiner ist als der maximale Verschiebeweg des Ventilglieds 13, verbleibt. In den Umfang des zwischen der Druckbeaufschlagungsfläche 33 und der Ringschulter 34 liegenden Ventilgliedabschnitts 134 mit einem dem Außendurchmesser D2 der Druckbeaufschlagungsfläche entsprechenden Außendurchmesser sind am Umfang versetzt angeordnete, ebene Flächen 36 eingeschliffen, die eine Fluidverbindung vom Ventilsitz 14 zu dem Ringraum 35 herstellen. Die Abdichtung des Ventilgliedabschnitts 133 gegen den Ventilkörper 11 erfolgt mittels eines Dichtungsrings 37, der in eine im Ventilkörper 11 ausgebildeten Ringnut 38 eingelegt ist und mittels eines Federelements 39 axial gegen die dem Ventilsitz 14 näher liegende Nutflanke angepresst wird und dadurch die radialen Toleranzen vom Ventilgliedabschnitt 133 zum Ventilkörper 11 abdichtet. Die Ringnut 38 wird durch einen in die Stirnfläche des Ventilkörpers 11 eingebrachten Einstich und dem den Einstich abdeckenden Körperboden 30 gebildet. Mittels des Körperbodens 30 wird das Federelement 39, das z. B. eine Wellfeder oder eine Federscheibe sein kann, vorgespannt. Zwischen dem Dichtungsring 37 und dem Ventilkörper 11 ist zum Ausgleich der radialen Toleranzen ein radialer Spalt 40 vorhanden.

Im geschlossenen Zustand des Ventils übt der in der Ventilkammer 12 herrschende Fluiddruck über die Ringfläche D1 - D4 der Druckbeaufschlagungsfläche 33 auf das Ventilglied 13 ein Öffnungskraft aus, die von der Schließkraft der Ventilschließfeder 18 kompensiert wird. Bei geöffneten Ventil vergrößert sich die vom Fluiddruck beaufschlagte Fläche von D1 - D4 auf D2 - D4. Die Ventilschließfeder 18 muss damit eine Federkraft zum Schließen des Ventils aufbringen, die größer ist als die zum Aufrechthalten des Dichtsitzes erforderliche Federkraft. Eine größere Federkraft bedeutet höheren Verschleiß am Ventilsitz 14 und eine größere Schaltkraft des Aktors 17 zum Öffnen des Ventils. Der bei offenem Ventil im Ringraum 35 herrschende Fluiddruck erzeugt über die Ringschulter 34 eine in Schließrichtung wirkende Gegenkraft, die die Zunahme des hydraulischen Wirkdurchmessers auf das Ventilglied 13 kompensiert. Die auf das Ventilglied 13 wirkende hydraulische Kraft ist im geschlossenen und geöffneten Zustand des Ventils somit gleich groß.

## Patentansprüche

1. Ventil zum Zumessen von Fluid, mit einem eine Innenwand aufweisenden Ventilkörper (11), der eine fluidbefüllte, von einem Dichtsitz verschlossene Ventilkammer (12) aufweist, mit einem die Ventilkammer (12) durchdringenden Ventilglied (13), das mit einem am Ventilkörper (11) ausgebildeten Ventilsitz (14) den Dichtsitz bildet und in Fluidströmungsrichtung stromabwärts des Dichtsitzes im Ventilkörper (11) mit Radialspiel gleitgeführt ist, mit im Ventilkörper (11) ausgebildeten Spritzlöchern (19), die je eine stromabwärts des Dichtsitzes in der Innenwand des Ventilkörpers (11) liegende Locheintrittsöffnung (191) aufweisen, und mit einem das Ventilglied (13) zum Öffnen des Dichtsitzes in Fluidströmungsrichtung verschiebenden Aktor (17), wobei der Ventilkörper (11) mit einem Körperboden (30) abgeschlossen ist, der mit dem Ventilglied (13) einen Leckagesammelraum (31) begrenzt, und dass der Leckagesammelraum (31) über einen im Ventilglied (13) verlaufenden Leckagekanal (32) mit einer Leckagekammer (21) in Verbindung steht, die ihrerseits mit einem Rücklaufkanal (22) für einen Fluidrücklauf verbunden ist, **dadurch gekennzeichnet, dass** das Ventilglied (13) eine mit dem Ventilsitz (14) den Dichtsitz bildende, die Ventilkammer (12) begrenzende, ringförmige Druckbeaufschlagungsfläche (33) aufweist, deren Außendurchmesser (D2) größer und deren Innendurchmesser (D4) deutlich kleiner als der Ventilsitzdurchmesser (D1) ist und am Ventilglied (13) stromabwärts des Dichtsitzes eine von der Druckbeaufschlagungsfläche (33) abgekehrte Ringschulter (34) ausgebildet ist, deren Außendurchmesser dem Außendurchmesser (D2) der Druckbeaufschlagungsfläche (33) und deren Innendurchmesser dem Ventilsitzdurchmesser (D1) entspricht, und dass der stromabwärts der Ringschulter (34) sich anschließende Ventilgliedabschnitt (133) gegen den Ventilkörper (11) abgedichtet ist.

2. Ventil nach Anspruch 1, **dadurch gekennzeichnet, dass** die axiale Abmessung des Leckagesammelraums (31) größer ist als der maximale Verschiebeweg des Ventilglieds (13).

3. Ventil nach Anspruch 1, **dadurch gekennzeichnet, dass** ein an die Druckbeaufschlagungsfläche (33) sich stromabwärts anschließender Ventilgliedabschnitt (134) einen an den Außendurchmesser (D2) der Druckbeaufschlagungsfläche (33) angepassten, über den Ventilgliedabschnitt (134) konstanten Außendurchmesser aufweist und im Ventilkörper (11) gleitgeführt ist.

4. Ventil nach Anspruch 1, **dadurch gekennzeichnet, dass** zwischen der Ringschulter (34) und dem gegen den Ventilkörper (11) abgedichteten Ventilgliedabschnitt (133) ein Ringraum (35) verbleibt, dessen axiale Abmessung größer ist als der maximale Verschiebeweg des Ventilglieds (13), und dass in den Umfang des zwischen Druckbeaufschlagungsfläche (33) und Ringschulter (34) liegenden Ventilgliedabschnitts (134) eine Verbindung zum Ringraum (35) herstellende, ebene Flächen (36) eingearbeitet sind.

5. Ventil nach Anspruch 1 oder 4, **dadurch gekennzeichnet**, das der sich an die Ringschulter (34) stromabwärts anschließende Ventilgliedabschnitt (133) einen dem Ventilsitzdurchmesser (D1) entsprechenden Außendurchmesser aufweist und die Abdichtung gegen den Ventilkörper (11) mittels eines Dichtungsrings (37) vorgenommen ist, der den Ringraum (35) auf dessen der Ringschulter (34) gegenüberliegenden Seite begrenzt.

6. Ventil nach Anspruch 5, **dadurch gekennzeichnet, dass** der Dichtungsring (37) in einer im Ventilkörper (11) ausgebildeten Ringnut (38) einliegt und mittels eines Federelements axial gegen die dem Ventilsitz (14) näher liegende Nutflanke angepresst ist und vorzugsweise dass das Federelement mittels des an den Ventilkörper (11) angesetzten und am Ventilkörper (11) befestigten Körperbodens (30) vorgespannt ist.

7. Ventil nach einem der Ansprüche 1 bis 6, **dadurch gekennzeichnet, dass** der Ventilkörper (11) axial an ein Ventilgehäuse (15) angesetzt ist, das den Aktor (17) und eine Ventilschließfeder (18) zur Ventilgliedbetätigung aufnimmt, und dass die Leckagekammer (21) von einer am Ventilkörper (11) einerseits und am Ventilglied (13) andererseits jeweils randseitig fluiddicht festgelegten Membran (20) und dem Ventilkörper (11) begrenzt ist.

8. Ventil nach Anspruch 7, **dadurch gekennzeichnet, dass** die Ventilkammer (12) mit einem Zulaufkanal (25) für einen Fluidzulauf verbunden ist und Zulaufkanal (25) und Rücklaufkanal (22) sich axial im Ventilgehäuse (15) erstrecken.

## Claims

1. Valve for metering fluid, having a valve body (11) which has an internal wall and which has a fluid-filled valve chamber (12) closed off by a sealing seat, having a valve element (13) which extends through the valve chamber (12) and which, together with a valve seat (14) formed on the valve body (11), forms the sealing seat and which, downstream of the sealing seat as viewed in a fluid flow direction, is guided slidingly in the valve body (11) with a radial clearance, having spray holes (19) which are formed in the valve body (11) and which each have a hole inlet opening (191) situated, downstream of the sealing seat, in the internal wall of the valve body (11), and having an actuator (17) which displaces the valve element (13) in the fluid flow direction for the purposes of opening the sealing seat, wherein the valve body (11) is closed off by way of a body base (30) which, together with the valve element (13), delimits a leakage collecting chamber (31), and in that the leakage collecting chamber (31) is connected, via a leakage duct (32) running in the valve element (13), to a leakage chamber (21) which in turn is connected to a return duct (22) for a return of fluid, **characterized in that** the valve element (13) has a ring-shaped pressure exertion surface (33) which, together with the valve seat (14), forms the sealing seat and which delimits the valve chamber (12) and whose external diameter (D2) is greater than the valve seat diameter (D1) and whose internal diameter (D4) is considerably smaller than the valve seat diameter (D1), and, on the valve element (13), downstream of the sealing seat, there is formed a ring-shaped shoulder (34) which is averted from the pressure exertion surface (33) and whose external diameter corresponds to the external diameter (D2) of the pressure exertion surface (33) and whose internal diameter corresponds to the valve seat diameter (D1), and **in that** the valve element section (133) which adjoins the ring-shaped shoulder (34) in a downstream direction is sealed off against the valve body (11).

2. Valve according to Claim 1, **characterized in that** the axial dimension of the leakage collecting chamber (31) is greater than the maximum displacement travel of the valve element (13).

3. Valve according to Claim 1, **characterized in that** a valve element section (134) which adjoins the pressure exertion surface (33) in a downstream direction has an external diameter adapted to the external diameter (D2) of the pressure exertion surface (33) and constant over the valve element section (134), and is guided slidingly in the valve body (11).

4. Valve according to Claim 1, **characterized in that**, between the ring-shaped shoulder (34) and the valve element section (133) which is sealed off against the valve body (11), there remains a ring-shaped chamber (35), the axial dimension of which is greater than the maximum displacement travel of the valve element (13), and **in that**, into the circumference of the valve element section (134) situated between the pressure exertion surface (33) and ring-shaped shoulder (34), there are formed planar surfaces (36) which produce a connection to the ring-shaped chamber (35).

5. Valve according to Claim 1 or 4, **characterized in that** the valve element section (133) which adjoins the ring-shaped shoulder (34) in a downstream direction has an external diameter corresponding to the valve seat diameter (D1), and the sealing against the valve body (11) is realized by way of a seal ring (37) which delimits the ring-shaped chamber (35) on that side thereof which is situated opposite the ring-shaped shoulder (34).

6. Valve according to Claim 5, **characterized in that** the seal ring (37) lies in a ring-shaped groove (38) which is formed in the valve body (11) and is, by way of a spring element, pressed axially against that groove flank which is situated closer to the valve seat (14), and preferably **in that** the spring element is preloaded by way of the body base (30) which is mounted onto the valve body (11) and fastened to the valve body (11).

7. Valve according to one of Claims 1 to 6, **characterized in that** the valve body (11) is mounted axially onto a valve housing (15) which accommodates the actuator (17) and a valve closing spring (18) for the actuation of the valve element, and **in that** the leakage chamber (21) is delimited by a diaphragm (20), which is fixed in each case at the edges in fluid-tight fashion to the valve body (11) at one side and to the valve element (13) at the other side, and by the valve body (11).

8. Valve according to Claim 7, **characterized in that** the valve chamber (12) is connected to an inflow duct (25) for an inflow of fluid, and the supply duct (25) and return duct (22) extend axially in the valve housing (15).

## Revendications

1. Soupape de dosage de fluide, avec un corps de soupape (11) présentant une paroi interne, qui présente une chambre de soupape (12) remplie de fluide, fermée par un siège d'étanchéité, avec un organe de soupape (13) traversant la chambre de soupape (12), qui forme, avec un siège de soupape (14) réalisé au niveau du corps de soupape (11), le siège d'étanchéité, et qui est guidé de manière glissante avec un jeu radial dans la direction de l'écoulement fluidique en aval du siège d'étanchéité dans le corps de soupape (11), avec des trous d'injection (19) réalisés dans le corps de soupape (11), qui présentent chacun une ouverture d'entrée de trou (191) située en aval du siège d'étanchéité dans la paroi interne du corps de soupape (11), et avec un actionneur (17) déplaçant l'organe de soupape (13) dans la direction d'écoulement fluidique en vue d'ouvrir le siège d'étanchéité, le corps de soupape (11) étant terminé par un fond de corps (30) qui, avec l'organe de soupape (13), délimite un espace de collecte de fuite (31), et en ce que l'espace de collecte de fuite (31) est en liaison par le biais d'un canal de fuite (32) s'étendant dans l'organe de soupape (13) avec une chambre de fuite (21) qui pour sa part est connectée à un canal de retour (22) pour un retour du fluide, **caractérisée en ce que** l'organe de soupape (13) présente une surface de sollicitation de pression (33) de forme annulaire, formant avec le siège de soupape (14) le siège d'étanchéité, et limitant la chambre de soupape (12), dont le diamètre extérieur (D2) est supérieur et dont le diamètre intérieur (D4) est nettement inférieur au diamètre du siège de soupape (D1) et **en ce qu'**un épaulement annulaire (34) détourné de la surface de sollicitation de pression (33) est réalisé au niveau de l'organe de soupape (13) en aval du siège d'étanchéité, dont le diamètre extérieur correspond au diamètre extérieur (D2) de la surface de sollicitation de pression (33) et dont le diamètre intérieur correspond au diamètre du siège de soupape (D1), et **en ce que** la portion de l'organe de soupape (133) se raccordant en aval de l'épaulement annulaire (34) est étanchéifiée par rapport au corps de soupape (11).

2. Soupape selon la revendication 1, **caractérisée en ce que** la dimension axiale de l'espace de collecte de fuite (31) est supérieure à la course de déplacement maximale de l'organe de soupape (13).

3. Soupape selon la revendication 1, **caractérisée en ce qu'**une portion d'organe de soupape (134) se raccordant en aval à la surface de sollicitation de pression (33) présente un diamètre extérieur constant sur la portion d'organe de soupape (134), adapté au diamètre extérieur (D2) de la surface de sollicitation de pression (33), et est guidée de manière glissante dans le corps de soupape (11).

4. Soupape selon la revendication 1, **caractérisée en ce qu'**entre l'épaulement annulaire (34) et la portion d'organe de soupape (133) étanchéifiée par rapport au corps de soupape (11) subsiste un espace annulaire (35) dont la dimension axiale est supérieure à la course de déplacement maximale de l'organe de soupape (13), et **en ce que** dans la périphérie de la portion d'organe de soupape (134) située entre la surface de sollicitation de pression (33) et l'épaulement annulaire (34) sont réalisées des surfaces planes (36) établissant une liaison avec l'espace annulaire (35).

5. Soupape selon la revendication 1 ou 4, **caractérisée en ce que** la portion d'organe de soupape (133) se raccordant en aval à l'épaulement annulaire (34) présente un diamètre extérieur correspondant au diamètre du siège de soupape (D1) et l'étanchéité vis-à-vis du corps de soupape (11) est réalisée au moyen d'une bague d'étanchéité (37) qui limite l'espace annulaire (35) sur son côté opposé à l'épaulement annulaire (34).

6. Soupape selon la revendication 5, **caractérisée en ce que** la bague d'étanchéité (37) est insérée dans une rainure annulaire (38) réalisée dans le corps de soupape (11) et est pressée au moyen d'un élément de ressort axialement contre le flanc de rainure situé plus près du siège de soupape (14) et, de préférence, **en ce que** l'élément de ressort est précontraint au moyen du fond de corps (30) appliqué contre le corps de soupape (11) et fixé au corps de soupape (11).

7. Soupape selon l'une quelconque des revendications 1 à 6, **caractérisée en ce que** le corps de soupape (11) est appliqué axialement contre un boîtier de soupape (15), qui reçoit l'actionneur (17) et un ressort de fermeture de soupape (18) pour l'actionnement de l'organe de soupape, et **en ce que** la chambre de fuite (21) est limitée par le corps de soupape (11) et une membrane (20) fixée d'une part au corps de soupape (11) et d'autre part à l'organe de soupape (13), de manière étanche aux fluides du côté du bord.

8. Soupape selon la revendication 7, **caractérisée en ce que** la chambre de soupape (12) est connectée à un canal d'entrée (25) pour une entrée de fluide et le canal d'entrée (25) et le canal de retour (22) s'étendent axialement dans le boîtier de soupape (15).
